# EUROPEAN PATENT SPECIFICATION

(11) **EP 3 894 245 B1**
(45) Date of publication and mention of the grant of the patent: **07.06.2023**
(21) Application number: 19832001.2
(22) Date of filing: 11.12.2019
(51) Int. Cl.: B60G 11/27, B60G 17/052, F16K 31/06, F16K 31/08, F16K 31/60, B60G 17/015, F16K 31/05

(54) **VEHICLE SUSPENSION APPARATUS**
FAHRZEUGAUFHÄNGUNGSVORRICHTUNG
APPAREIL DE SUSPENSION DE VÉHICULE

(30) Priority: 11.12.2018 GB 201820137
(43) Date of publication of application: 20.10.2021
(73) Proprietor: Haldex Brake Products Aktiebolag, 261 24 Landskrona (SE)
(72) Inventor: MELLINGS, Carl, Warwickshire CV13 6DE (GB); KRAUS, Alexander, Warwickshire CV13 6DE (GB)
(74) Representative: Forresters IP LLP
(86) International application number: PCT/EP2019/084745
(87) International publication number: WO 2020/120619

(56) References cited:
- EP-A1- 2 177 383
- EP-A1- 2 263 892
- EP-A1- 3 208 119
- EP-A2- 2 851 222
- WO-A1-02/04851
- WO-A1-2019/101817

## Description

This invention relates to a vehicle suspension apparatus.

It is known in the art of vehicles including a tractor and one or more trailers, to provide a suspension apparatus which enables levelling of the or each trailer. The suspension apparatus includes a raise/lower valve for controlling the height of the suspension. The valve includes an inlet, which is in fluid communication with a supply of pressurised fluid, for example a suspension reservoir, an outlet, which is in fluid communication with a suspension actuator, for example suspension bellows, and an exhaust port, which is capable of venting to atmosphere or another low pressure area. The valve is typically manually operable via a handle which is located on the exterior of the vehicle. Electronically operable raise/lower valves are also known.

EP2177383 discloses a valve device for a pneumatic suspension assembly. The valve device can be actuated manually or electrically to change the level of the vehicle.

A disadvantage of known suspension apparatus is that it may be possible to electronically set a ride height of the vehicle, for example, but if electrical power is lost or disconnected, it is not possible to adjust the suspension height electronically, for example if a trailer is disconnected from a tractor of a heavy goods vehicle, the power supply to the trailer is likely to be lost. It is then not possible to adjust the suspension height, for example to adjust a loading height of the trailer. Furthermore, suspension apparatus may lose height over time, for example as a trailer is loaded, or due to leakage of pneumatic fluid from the suspension apparatus.

An aim of the invention is to provide an improved suspension apparatus.

In accordance with embodiments of the invention, there is provided: a vehicle suspension apparatus including a valve having an inlet port which is fluidly communicable with a supply of pressurised fluid, an outlet port which is fluidly communicable with a suspension actuator, and an exhaust port which is fluidly communicable with a low-pressure area, the valve also including a valve actuation member which is moveable between a first position to enable the flow of fluid from the supply of pressurised fluid to the suspension actuator and a second position to enable the flow of fluid from the suspension actuator to the exhaust port, wherein the valve actuation member is electronically and manually controllable, the suspension apparatus including a manual adjustment device which is moveable between a disengaged position in which the flow of fluid to and/or from the suspension actuator is not controlled by the manual adjustment device, and an engaged position in which the flow of fluid to and/or from the suspension actuator is controlled by the manual adjustment device.

The manual adjustment device may be biased towards its disengaged position.

The vehicle suspension apparatus includes a levelling portion, which includes a first inlet which is fluidly communicable with the outlet port of the valve, a second inlet which is fluidly communicable with a levelling device, and an outlet which is fluidly communicable with the suspension actuator.

The levelling device may be a levelling valve.

The levelling portion may be directly fluidly connected to the outlet port of the valve.

The levelling portion may include a closure member which is moveable between a first position in which the closure member closes the first inlet of the levelling portion and a second position in which the closure member closes the second inlet of the levelling portion.

The position of the closure member may be electronically controllable.

The position of the closure member may be manually controllable.

The position of the closure member may be controllable by the manual adjustment device.

The closure member may be biased towards its first position, enabling fluid communication between the levelling device and the suspension actuator. The manual adjustment device may include a first engagement formation which is operable to engage the valve actuation member and a second engagement formation which is operable to engage the closure member of the levelling portion.

The suspension actuator may include one or more suspension bellows.

The valve actuation member may be a flexure.

The closure member may be a flexure.

The suspension actuator may be fluidly communicable with at least one of the valve and the levelling device at all times, even in the event of a loss of electrical power.

An embodiment of the invention will now be described, by way of example only, with reference to the accompanying drawings, of which:
FIGURE 1 shows a side cross-sectional view of a suspension apparatus not according to the invention;
Figures 2A and 2B are front cross-sectional views of the suspension apparatus of Figure 1, showing a manual adjustment device of the suspension apparatus in a disengaged and engaged position, respectively;
FIGURES 3A and 3B are side cross-sectional views of the suspension apparatus showing the suspension apparatus in a raise and lower configuration, respectively, a valve actuation member being electronically controlled;
FIGURES 4A and 4B are side cross-sectional views of the suspension apparatus in a raise and lower configuration, respectively, with the valve actuation member being manually controlled;
FIGURE 5 is a front cross-sectional view of an embodiment of a suspension apparatus according to the invention;
FIGURES 6A-C are front cross-sectional views of the suspension apparatus of Figure 5, in an electronically adjustable configuration; and
FIGURES 7A-C are front cross-sectional views of the suspension apparatus of Figure 5, in a manually adjustable configuration.

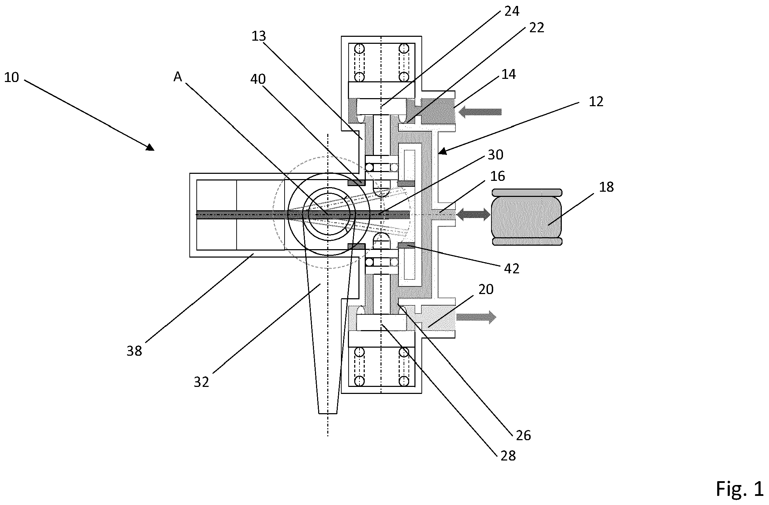

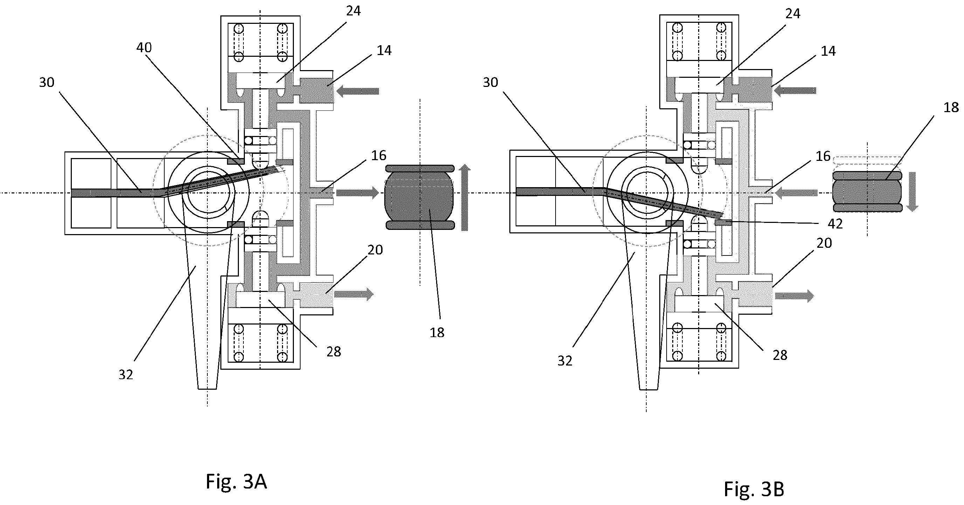

Referring to Figures 1 to 4B, there is shown a suspension apparatus 10 for a vehicle. The suspension apparatus 10 includes a valve 12 which is operable to control the height of a vehicle suspension actuator, e.g. suspension bellows 18. The valve 12 includes a valve body 13, an inlet port 14, which is in fluid communication with a supply of pressurised fluid, for example a suspension reservoir; an outlet port 16, which is in fluid communication with the suspension actuator 18; and an exhaust port 20, which is capable of venting to atmosphere or another low pressure area. The valve 12 also includes a first valve seat 22 and a first valve member 24 which is moveable between a closed position against the first valve seat 22 to close the inlet port 14, and an open position in which the first valve member 24 is spaced from the first valve seat 22, to open the inlet 14, to permit fluid flow from the source of pressurised fluid into the valve body 13. The valve 12 also includes a second valve seat 26 and a second valve member 28 which is moveable between a closed position against the second valve seat 26 to close the exhaust port 20, and an open position in which the second valve member 28 is spaced from the second valve seat 26 to open the exhaust port 20, to permit the flow of fluid from the valve body 13 to atmosphere or other low pressure region. The first and second valve members 24, 28 may be formed as separate members, or may be formed as a single member.

The valve 12 also includes a valve actuation member 30, which is operable to move the first and second valve members 24, 28 between their respective open and closed positions. The valve actuation member 30 may be manufactured from or include a resilient material, and may be in the form of a flexure. The valve actuation member 30 is moveable between a first position and a second position. The default position of the valve actuation member is an intermediate position between the first and second positions. In its first position, the valve actuation member 30 engages with the first valve member 24, and positions the first valve member 24 in its open position, thus opening the inlet port 14. In its second position, the valve actuation member 30 engages with the second valve member 28, and positions the second valve member 28 in its open position, thus opening the exhaust port 20. The valve actuation member 30 may also occupy an intermediate position, between its first and second positions. When the valve actuation member 30 is in its intermediate position, the valve actuation member 30 engages neither the first valve member 24 nor the second valve member 28, such that both the first valve member 24 and the second valve member 28 occupy their closed positions.

The suspension apparatus 10 is electronically operable. The valve 12 includes a first electromagnet 40, which is associated with the first valve seat 22 and a second electromagnet 42, which is associated with the second valve seat 26. The valve actuation member 30 may include a ferromagnetic material, such that energisation of the first electromagnet 40 attracts the valve actuation member 30 towards its first position, and energisation of the second electromagnet 42 attracts the valve actuation member 30 towards its second position.

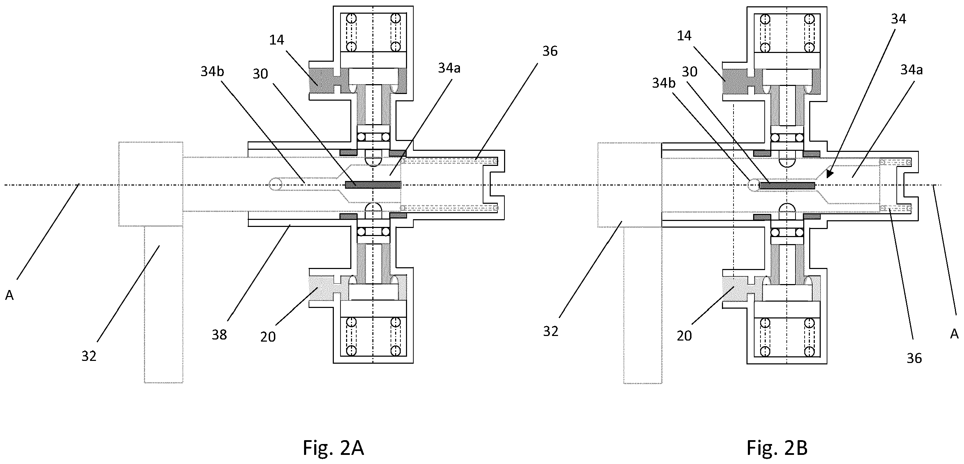

The valve actuation member 30 is connected to a manual adjustment device, which in embodiments may be a handle 32. The handle 32 is manually operable to move the valve actuation member 30 between its first, intermediate and second positions. The handle 32 may be rotatable to move the valve actuation member 30. The handle 32 may be rotatable about a first axis A. The handle 32 may also be moveable between an engaged position, wherein the handle 32 is engaged with the valve actuation member 30, and is operable to move the valve actuation member 30 (as shown in Fig 2B), and a disengaged position wherein the handle is disengaged from the valve actuation member 30, and movement of the handle 32 does not cause movement of the valve actuation member 30 (as shown in Fig. 2A). The handle 32 may be linearly moveable between the disengaged position and engaged position. The linear movement of the handle 32 between the engaged and disengaged positions may be along, or substantially parallel with the first axis A. The handle 32 may include an engagement formation 34 for engaging a part of the valve actuation member 30. The engagement formation 34 may include a first engagement portion 34a and a second engagement portion 34b. When the handle 32 is in its disengaged position, the valve actuation member 30 may be located in the first engagement or "clearance" portion 34a, wherein the handle 32 does not engage with the valve actuation member 30, and rotation of the handle 32 about the first axis A does not effect movement of the valve actuation member 30. When the handle 32 is in its engaged position, at least a part of the valve actuation member 30 may be located in the second engagement portion 34b, such that the handle 32 engages with the valve actuation member 30, and rotation of the handle 32 about the first axis A effects movement of the valve actuation member 30 between its first, second and intermediate positions. The suspension apparatus 10 may include a biasing member 36 to bias the handle 32 into one of the engaged position or disengaged position. The biasing member 36 may be a resilient biasing member, for example a spring. The biasing member 36 may bias the handle 32 towards the disengaged position. The biasing member 36 may be positioned between a part of the handle 32 and a housing 38 of the suspension apparatus 10. Part of the handle 32 may be accessible from the exterior of the vehicle.

In use, in order to increase the height of the suspension, first electromagnet 40 is energised, whilst the second electromagnet 42 is not energised, such that the valve actuation member 30 is attracted towards its first position, thus opening the inlet port 14. The pressurised fluid source is thus fluidly communicable with the outlet port 16, to increase the volume of the suspension actuator 18, and hence to increase the vehicle height. In order to decrease the height of the suspension, and hence the height of the vehicle, the second electromagnet 42 is energised, whilst the first electromagnet 40 is not energised. The valve actuation member 30 is attracted towards its second position, to open the exhaust port 20, such that fluid may flow through the valve body 13 from the suspension actuator 18 to atmosphere or other low pressure area, to reduce the volume of the suspension actuator 18.

The suspension apparatus 10 may include or be communicable with a control unit, which may provide signals to control the valve 12. The control unit may be a part of the vehicle braking system. The control unit may provide signals to energise the first and second electromagnets 40, 42 appropriately, to provide a desired suspension height. One or more sensors may be provided in communication with the control unit in order to provide an indication of suspension height. The controller may determine whether adjustment of the suspension height is required, for example from signals provided by one or more of the or each of the sensors, and control the electromagnets 40, 42 accordingly.

The ability to adjust the suspension height electronically is advantageous in that it may be possible to set different heights for different situations, for example different loading conditions, and/or it may be possible to adjust the suspension height automatically, for example in response to a signal from a sensor. A disadvantage of a solely electrically operated suspension apparatus 10 is that if there is a lack of or loss of electrical power, for example if a trailer is disconnected from its associated tractor, the controller and/or the electromagnets 40, 42 may not be operable.

The suspension apparatus 10 is also manually adjustable. It is possible to adjust the height of the suspension apparatus 10 without a power supply being connected with such an arrangement. Such manual adjustment may be advantageous in situations where a suspension height other than "ride height" is required, for example to adjust the height of the vehicle to match another body, for example a vehicle dock (e.g. a loading bay) or another vehicle, but the vehicle, e.g. a trailer, is disconnected from a power supply.

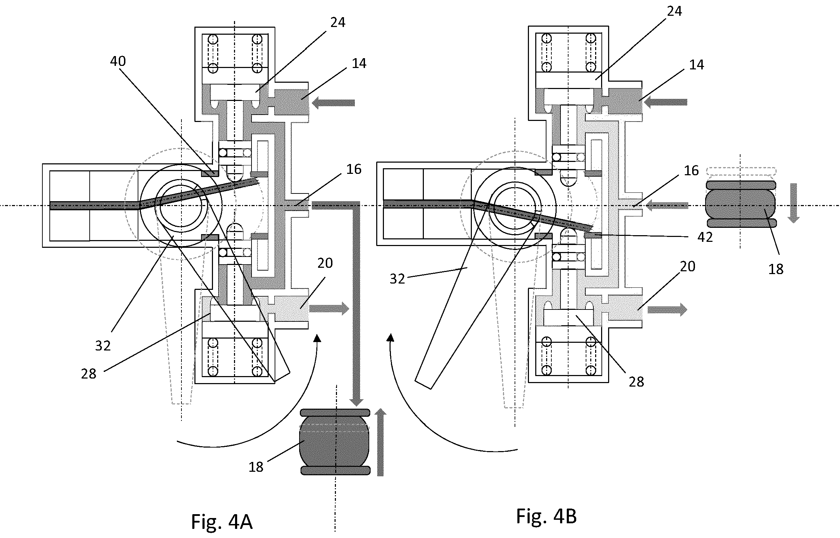

To manually adjust the suspension height, an operator moves (in the example shown, pushes) the handle 32 into its engaged position relative to the valve actuation member 30. Rotation of the handle 32 in a first, for example anticlockwise, direction causes movement of the valve actuation member 30 into its first position, such that the inlet port 14 is open, as shown, for example in Figure 4A. Pressurised fluid is able to enter the valve body 13 via the inlet port 14, and be transferred to the suspension actuator 18 via the outlet port 16. Supply of fluid to the suspension actuator 18 increases the volume of the suspension actuator 18, which, in turn, increases the height of the vehicle body.

In order to lower the suspension manually, the user rotates the handle 32 in the opposite direction (for example clockwise) to cause the valve actuation member 30 to occupy its second position such that the exhaust port 20 is open, as shown, for example, in Figure 4B. The inlet port 14 is closed such that there is no fluid communication between the supply of pressurised fluid and the suspension actuator 18. Fluid is able to enter the valve body 13 from the suspension actuator 18 via the outlet port 16, and to be vented via the exhaust port 20.

When the handle 32 is released, the biasing member 36 moves the handle 32 into its disengaged position, and the valve actuation member 30 moves into its intermediate position such that both the inlet port 14 and the outlet port 16 are closed. The resilience of the valve actuation member 30 means that the valve actuation member 30 returns to its default, intermediate position automatically when neither of the electromagnets 40, 42 is energised. This effectively sets the suspension height, and the inlet port 14 and the outlet port 16 are closed unless and until further adjustment of the suspension actuator 18 is required.

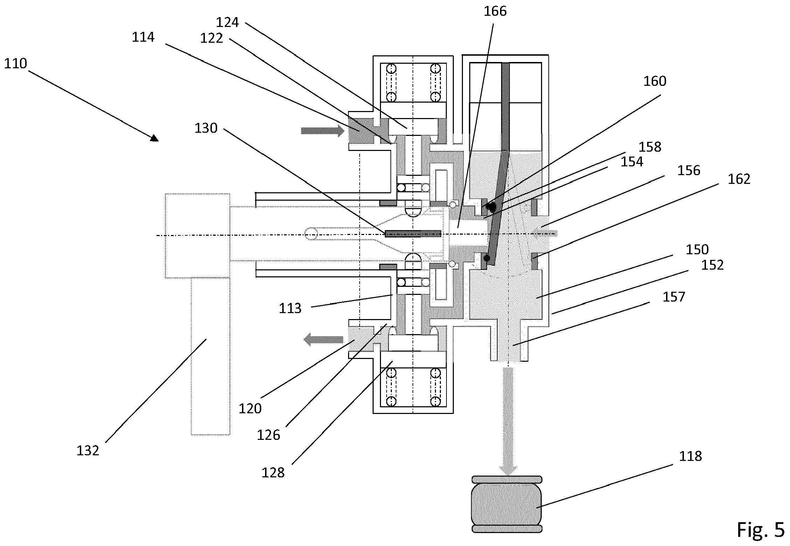

An embodiment of a suspension apparatus 110 according to the invention is shown in Figures 5 - 7C.

Features of the suspension apparatus 110 which are the same as those shown in Figures 1 to 4B have the same reference numerals with a '1' prefix. The suspension apparatus 110 has a valve, having a valve body 113, an inlet port 114, an outlet port and an exhaust port 120. The outlet port is fluidly communicable with a suspension actuator 118, for example suspension bellows. The suspension apparatus 110 includes a first valve seat 122, a first valve member 124, a second valve seat 126 and a second valve member 128. A valve actuation member 130 is operable to move the first and second valve members 124, 128. A manual adjustment device, for example a handle, 132 is operable to control the position of the valve actuation member 130. First and second electromagnets are provided to enable electronic control of the valve actuation member 130, and hence electronic control of the suspension height.

The suspension apparatus 110 also includes a levelling portion 150. The levelling portion 150 includes a body 152 which is fluidly communicable with the output port 116. The levelling portion 150 includes a first inlet 154 which is fluidly communicable with the outlet 116 of the valve 112, and a second inlet 156 which is fluidly communicable with a levelling device, for example a levelling valve. The levelling valve may be a pneumatic levelling valve. The levelling device may be manually operable. The levelling portion 150 includes an outlet 157 which is fluidly communicable with a suspension actuator 118 of the vehicle. It will be understood that more than one suspension actuator 118 may be provided, as required, and that the outlet 157 may be fluidly communicable with each suspension actuator 118. The levelling portion 150 includes a closure member 158 which is moveable between a first position in which the closure member 158 closes the first inlet 154, and prevents fluid communication between the valve 12 and the levelling portion 150, and a second position in which the closure member 158 closes the second inlet 156, thus preventing fluid communication between the levelling valve and the levelling portion 150. The closure member 158 may be a flexure.

The levelling portion 150 includes a first levelling portion magnet 160 and a second levelling portion magnet 162. The first levelling portion magnet 160 may be a permanent magnet and the second levelling portion magnet 162 may be an electromagnet which is energisable by a controller. The closure member 158 may include a ferromagnetic material. The closure member 158 is biased towards its first position, and energisation of the second electromagnet 162 causes the closure member 158 to be attracted to its second position.

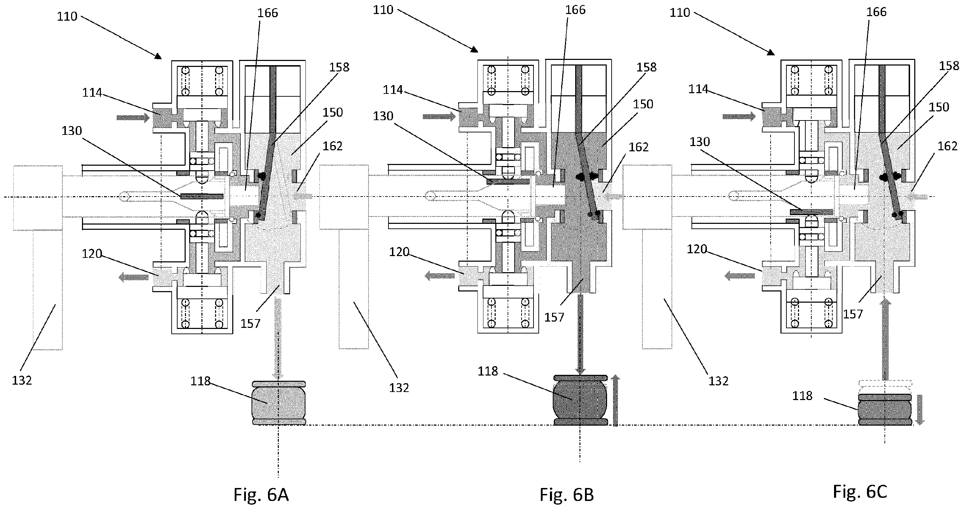

In use, when the closure member 158 is attracted to its first position, the first inlet 154 of the levelling portion is closed, and the suspension actuator 118 is in fluid communication with the levelling valve via the second inlet 156. This may cause the suspension actuator 118 to occupy a normal height or "ride height" as shown in Figure 6A. The normal height may be predetermined and/or preset.

It is possible to override this configuration, by energising the second levelling portion electromagnet 162, which attracts the closure member 158 to its second position in which the second inlet 156 is closed, and the suspension actuator 118 is in fluid communication with the valve as shown in Figures 6B, 6C. This allows the valve actuation member 130 to control the flow of fluid to and/or from the suspension actuator 118. In this situation, the valve may be operated electronically as described above in relation to the valve 12, i.e. the position of the valve actuation member 130, and hence the flow of fluid through the valve to the suspension actuator 118 is controlled by the energisation of the first and second electromagnets.

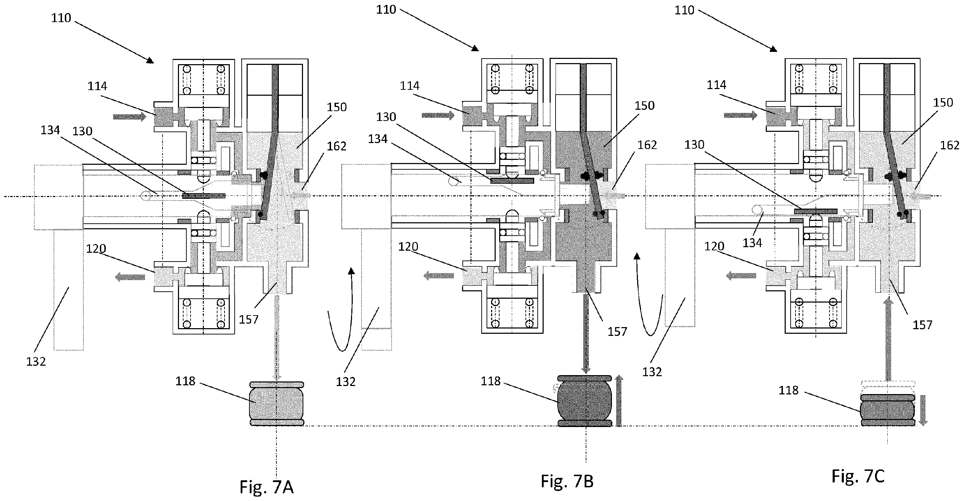

In the event of a lack or loss of electrical power to the suspension apparatus 110, for example if the vehicle stops and electrical power is switched off and/or disconnected, the closure member 158 is attracted towards its first position by the permanent magnet 160. In addition to a first engagement formation 134 which enables engagement and disengagement of the handle 132, the handle 132 may include a second engagement formation 166, which may be engageable with a part of the closure member 158. In embodiments, the second engagement formation 166 may include a protrusion which may extend through the outlet of the valve , and into the first inlet 154 of the levelling portion 150. Moving the handle 132 to its engaged position, causes the second engagement formation 166 to urge the closure member 158 towards its second position, such that the suspension actuator 118 is in fluid communication with the valve, and not in fluid communication with the levelling valve. Therefore it is possible to manually control the suspension height in the event of loss of electrical power, i.e. a user may move the handle 132 into its engaged position, and then move the handle 132 into the appropriate position to increase (as in Figure 7B) or decrease (as in Figure 7C) the height of the suspension actuator 118, by controlling the position of the valve actuation member 130 and hence the opening and/or closing of the first and second valve members 124, 128 to control the flow of fluid through the valve to the suspension actuator 118.

When the handle 132 is in its disengaged position, the second engagement formation 166 does not engage the closure member 158, and has no effect on the position of the closure member 158. In this condition, the closure member 158 is attracted towards its first position (levelling valve in fluid communication with the suspension actuator 118).

To reset the suspension height to the "ride height", the second levelling portion electromagnet 162 is de-energised and the closure member 158 is attracted to its first position, enabling fluid communication between the levelling valve and the suspension actuator 118.

The present invention is advantageous since the suspension actuator 118 may be controlled whether there is electrical power or not. Biasing the closure member 158 to its first position wherein the levelling valve is in fluid communication with the suspension actuator 118 means that the levelling valve continues to be in fluid communication with the suspension actuator even when there is no electrical power supplied to the suspension apparatus. Thus the height of the suspension actuator 118 may be maintained (for example at a predetermined and/or set "normal" or "ride" height) via the levelling valve, without the need for electrical power, even if fluid is lost from the suspension actuator 118, for example through leakage. The option to manually adjust the suspension height whether or not electrical power is supplied is a further advantage. The biasing of the manual adjustment device to its disengaged position means that electronic control of the suspension apparatus 10, 110 is the dominant control mode, and a user cannot inadvertently forget to revert to electronic control in the event of regaining electrical power, for example by reconnection to a power supply.

The arrangement of the suspension apparatus 10, 110 described herein, enables a simple arrangement of pneumatic pipes and connections.

When used in this specification and claims, the terms "comprises" and "comprising" and variations thereof mean that the specified features, steps or integers are included. The terms are not to be interpreted to exclude the presence of other features, steps or components.

## Claims

1. A vehicle suspension apparatus (110) including a valve having an inlet port (114) which is fluidly communicable with a supply of pressurised fluid, an outlet port which is fluidly communicable with a suspension actuator (118), and an exhaust port (120) which is fluidly communicable with a low-pressure area, the valve also including a valve actuation member (130) which is moveable between a first position to enable the flow of fluid from the supply of pressurised fluid to the suspension actuator (118) and a second position to enable the flow of fluid from the suspension actuator to the exhaust port (120), wherein the valve actuation member (130) is electronically and manually controllable, the suspension apparatus (110) including a manual adjustment device which is moveable between a disengaged position in which the flow of fluid to and/or from the suspension actuator (118) is not controlled by the manual adjustment device, and an engaged position in which the flow of fluid to and/or from the suspension actuator (118) is controlled by the manual adjustment device, **characterised in that** the vehicle suspension apparatus (110) includes a levelling portion (150), which includes a first inlet (154) which is fluidly communicable with the outlet port of the valve, a second inlet (156) which is fluidly communicable with a levelling device, and an outlet (157) which is fluidly communicable with the suspension actuator (118).

2. A vehicle suspension apparatus (110) according to claim 1 wherein the manual adjustment device is biased towards its disengaged position.

3. A vehicle suspension apparatus (110) according to claim 1 or claim 2 wherein the levelling device is a levelling valve.

4. A vehicle suspension apparatus (110) according to any of the preceding claims wherein the levelling portion (150) is directly fluidly connected to the outlet port of the valve.

5. A vehicle suspension apparatus (110) according to any of the preceding claims wherein the levelling portion (150) includes a closure member (158) which is moveable between a first position in which the closure member (158) closes the first inlet (154) of the levelling portion (150) and a second position in which the closure member (158) closes the second inlet (156) of the levelling portion (150).

6. A vehicle suspension apparatus (110) according to claim 5 wherein the position of the closure member (158) is electronically controllable.

7. A vehicle suspension apparatus (110) according to claim 5 or 6 wherein the position of the closure member (158) is manually controllable.

8. A vehicle suspension apparatus (110) according to claim 7 wherein the position of the closure member (158) is controllable by the manual adjustment device.

9. A vehicle suspension apparatus (110) according to any of claims 5 to 8 wherein the closure member (158) is biased towards its first position, enabling fluid communication between the levelling device and the suspension actuator (118).

10. A vehicle suspension apparatus (110) according to any of claims 5 to 9 wherein the manual adjustment device includes a first engagement formation (134) which is operable to engage the valve actuation member (130) and a second engagement formation (166) which is operable to engage the closure member (158) of the levelling portion.

11. A vehicle suspension apparatus (110) according to any preceding claim wherein the suspension actuator (118) includes one or more suspension bellows.

12. A vehicle suspension apparatus (110) according to any of the preceding claims wherein the valve actuation member (130) is a flexure.

13. A vehicle suspension apparatus (110) according to any of claims 5 to 12 wherein the closure member (158) is a flexure.

14. A vehicle suspension apparatus according to any of the preceding claims wherein the suspension actuator is fluidly communicable with at least one of the valve and the levelling device at all times, even in the event of a loss of electrical power.

## Patentansprüche

1. Fahrzeugaufhängungsvorrichtung (110) einschließlich eines Ventils mit einer Einlassöffnung (114), die mit fluidisch einer Druckfluidversorgung verbindbar ist, einer Auslassöffnung, die fluidisch mit einem Aufhängungsaktuator (118) verbindbar ist, und einer Austrittsöffnung (120), die fluidisch mit einem Niederdruckbereich verbindbar ist, wobei das Ventil auch ein Ventilbetätigungselement (130) beinhaltet, das zwischen einer ersten Position, um den Fluidfluss von der Druckfluidversorgung zu dem Aufhängungsaktuator (118) zu ermöglichen, und einer zweiten Position, um den Fluidfluss von dem Aufhängungsaktuator zu der Austrittsöffnung (120) zu ermöglichen, bewegbar ist, wobei das Ventilbetätigungselement (130) elektronisch und manuell steuerbar ist, wobei die Aufhängungsvorrichtung (110) eine manuelle Einstellvorrichtung beinhaltet, die zwischen einer Außereingriffsposition, in welcher der Fluidfluss zu und/oder von dem Aufhängungsaktuator (118) nicht von der manuellen Einstellvorrichtung gesteuert wird, und einer Eingriffsposition, in welcher der Fluidfluss zu und/oder von dem Aufhängungsaktuator (118) von der manuellen Einstellvorrichtung gesteuert wird, bewegbar ist, **dadurch gekennzeichnet, dass** die Fahrzeugaufhängungsvorrichtung (110) einen Nivellierabschnitt (150), der einen ersten Einlass (154) beinhaltet, der fluidisch mit der Auslassöffnung des Ventils verbindbar ist, einen zweiten Einlass (156), der fluidisch mit einem Nivelliergerät verbindbar ist, und einen Auslass (157), der fluidisch mit dem Aufhängungsaktuator (118) verbindbar ist, beinhaltet.

2. Fahrzeugaufhängungsvorrichtung (110) nach Anspruch 1, wobei die manuelle Einstellvorrichtung hin zu ihrer Außereingriffsposition vorgespannt ist.

3. Fahrzeugaufhängungsvorrichtung (110) nach Anspruch 1 oder Anspruch 2, wobei das Nivelliergerät ein Nivellierventil ist.

4. Fahrzeugaufhängungsvorrichtung (110) nach einem der vorhergehenden Ansprüche, wobei der Nivellierabschnitt (150) direkt fluidisch mit der Auslassöffnung des Ventils verbunden ist.

5. Fahrzeugaufhängungsvorrichtung (110) nach einem der vorhergehenden Ansprüche, wobei der Nivellierabschnitt (150) ein Verschlusselement (158) beinhaltet, das zwischen einer ersten Position, in welcher das Verschlusselement (158) den ersten Einlass (154) des Nivellierabschnitts (150) verschließt, und einer zweiten Position, in welcher das Verschlusselement (158) den zweiten Einlass (156) des Nivellierabschnitts (150) verschließt, bewegbar ist.

6. Fahrzeugaufhängungsvorrichtung (110) nach Anspruch 5, wobei die Position des Verschlusselements (158) elektronisch steuerbar ist.

7. Fahrzeugaufhängungsvorrichtung (110) nach Anspruch 5 oder 6, wobei die Position des Verschlusselements (158) manuell steuerbar ist.

8. Fahrzeugaufhängungsvorrichtung (110) nach Anspruch 7, wobei die Position des Verschlusselements (158) von der manuellen Einstellvorrichtung steuerbar ist.

9. Fahrzeugaufhängungsvorrichtung (110) nach einem der Ansprüche 5 bis 8, wobei das Verschlusselement (158) hin zu seiner ersten Position vorgespannt ist, wodurch eine Fluidverbindung zwischen dem Nivelliergerät und dem Aufhängungsaktuator (118) ermöglicht wird.

10. Fahrzeugaufhängungsvorrichtung (110) nach einem der Ansprüche 5 bis 9, wobei die manuelle Einstellvorrichtung eine erste Eingriffsformation (134), die zum Ineingriffbringen des Ventilbetätigungselements (130) betätigbar ist, und eine zweite Eingriffsformation (166), die zum Ineingriffbringen des Verschlusselements (158) des Nivellierabschnitts betätigbar ist, beinhaltet.

11. Fahrzeugaufhängungsvorrichtung (110) nach einem vorhergehenden Anspruch, wobei der Aufhängungsaktuator (118) einen oder mehrere Aufhängungsbälge beinhaltet.

12. Fahrzeugaufhängungsvorrichtung (110) nach einem der vorhergehenden Ansprüche, wobei das Ventilbetätigungselement (130) ein Biegeelement ist.

13. Fahrzeugaufhängungsvorrichtung (110) nach einem der Ansprüche 5 bis 12, wobei das Verschlusselement (158) ein Biegeelement ist.

14. Fahrzeugaufhängungsvorrichtung nach einem der vorhergehenden Ansprüche, wobei der Aufhängungsaktuator jederzeit, selbst bei einem Stromausfall, fluidisch mit mindestens einem des Ventils und des Nivelliergeräts verbindbar ist.

## Revendications

1. Appareil de suspension de véhicule (110) comprenant une soupape comportant un orifice d'entrée (114) en communication fluidique avec une alimentation en fluide sous pression, un orifice de sortie en communication fluidique avec un actionneur de suspension (118), un orifice d'échappement (120) en communication fluidique avec une zone basse pression, la soupape comprenant également un élément d'actionnement de soupape (130) mobile entre une première position, permettant l'écoulement de fluide de l'alimentation en fluide sous pression à l'actionneur de suspension (118), et une seconde position, permettant l'écoulement de fluide de l'actionneur de suspension à l'orifice d'échappement (120), dans lequel l'élément d'actionnement de soupape (130) est commandé électroniquement et manuellement, l'appareil de suspension (110) comprenant un dispositif de réglage manuel mobile entre une position désengagée où l'écoulement de fluide vers et/ou depuis l'actionneur de suspension (118) n'est pas commandé par le dispositif de réglage manuel, et une position engagée où l'écoulement de fluide vers et/ou depuis l'actionneur de suspension (118) est commandé par le dispositif de réglage manuel, **caractérisé en ce que** l'appareil de suspension de véhicule (110) comprend une partie de nivellement (150) qui comporte une première entrée (154) en communication fluidique avec l'orifice de sortie de la soupape, une seconde entrée (156) en communication fluidique avec un dispositif de nivellement, et une sortie (157) en communication fluidique avec l'actionneur de suspension (118).

2. Appareil de suspension de véhicule (110) selon la revendication 1, dans lequel le dispositif de réglage manuel est orienté vers sa position désengagée.

3. Appareil de suspension de véhicule (110) selon soit la revendication 1, soit la revendication 2, dans lequel le dispositif de nivellement est une soupape de nivellement.

4. Appareil de suspension de véhicule (110) selon l'une quelconque des revendications précédentes, dans lequel la partie de nivellement (150) est directement connectée fluidiquement à l'orifice de sortie de la soupape.

5. Appareil de suspension de véhicule (110) selon l'une quelconque des revendications précédentes, dans lequel la partie de nivellement (150) comprend un élément de fermeture (158) mobile entre une première position dans laquelle l'élément de fermeture (158) ferme la première entrée (154) de la partie de nivellement (15) et une seconde position dans laquelle l'élément de fermeture (158) ferme la seconde entrée (156) de la partie de nivellement (150).

6. Appareil de suspension de véhicule (110) selon la revendication 5, dans lequel la position de l'élément de fermeture (158) est électroniquement commandée.

7. Appareil de suspension de véhicule (110) selon soit la revendication 5, soit la revendication 6, dans lequel la position de l'élément de fermeture (158) est électroniquement commandée.

8. Appareil de suspension de véhicule (110) selon la revendication 7, dans lequel la position de l'élément de fermeture (158) est commandée par le dispositif de réglage manuel.

9. Appareil de suspension de véhicule (110) selon l'une quelconque des revendications 5 à 8, dans lequel l'élément de fermeture (158) est orienté vers sa première position, permettant une communication fluidique entre le dispositif de nivellement et l'actionneur de suspension (118).

10. Appareil de suspension de véhicule (110) selon l'une quelconque des revendications 5 à 9, dans lequel l'élément de réglage manuel comprend une premier dispositif de prise (134) servant à mettre en prise l'élément d'actionnement de soupape (130) et un second dispositif de prise (166) servant à mettre en prise l'élément de fermeture (158) de la partie de nivellement.

11. Appareil de suspension de véhicule (110) selon l'une quelconque des revendications précédentes, dans lequel l'actionneur de suspension (118) comprend un ou plusieurs soufflets de suspension.

12. Appareil de suspension de véhicule (110) selon l'une quelconque des revendications précédentes, dans lequel l'élément d'actionnement de soupape (130) est un élément flexible.

13. Appareil de suspension de véhicule (110) selon l'une quelconque des revendications 5 à 12, dans lequel l'élément de fermeture (158) est un élément flexible.

14. Appareil de suspension de véhicule selon l'une quelconque des revendications précédentes, dans lequel l'actionneur de suspension est constamment en communication fluidique avec au moins soit la soupape soit le dispositif de nivellement, même dans l'éventualité d'une perte d'alimentation électrique.
